# EUROPÄISCHE PATENTANMELDUNG

(11) **EP 4 838 244 A2**
(43) Veröffentlichungstag der Anmeldung: **11.11.2026**
(21) Anmeldenummer: 26201571.2
(22) Anmeldetag: 20.11.2023
(51) Int. Cl.: G01R 33/00

(54) **SENSORANORDNUNG MIT EINEM PARAMAGNETISCHEM THERMOPILE-SENSOR UND EINEM INFRAROT-OPTISCHEM THERMOPILE SENSOR AUF EINEM GEMEINSAMEM TRÄGER**

(30) Priorität: 15.08.2023 DE 102023121741
(62) Dokumentnummer(n) der früheren Anmeldung(en) nach Art. 76 EPÜ: 23847889.5 / 4 762 345
(71) Anmelder: Drägerwerk AG & Co. KGaA, 23558 Lübeck (DE)
(72) Erfinder: Dicks, Bernd-Michael, 23558 Lubeck (DE); Jahns, Robert, 23558 Lubeck (DE); Hansmann, Hans-Ullrich, 23558 Lubeck (DE)

(57) **Zusammenfassung**

Eine Sensoranordnung (1) mit mindestens zwei auf einem Trägerelement (3) angeordneten Sensorelementen (5, 7, 9) ermöglicht eine Analyse eines Gasgemisches.

Je nach Ausgestaltungen der Sensorelemente (5, 7, 9) können unterschiedliche physikalische Eigenschaften des Gasgemisches an einem gemeinsamen Messort messtechnisch erfasst, verarbeitet und als Daten bereitgestellt werden.

## Beschreibung

Die Erfindung betrifft eine Sensoranordnung zur Bestimmung von physikalischen oder chemischen Situationen in einem Atemgasgemisch, beispielsweise in einem Einatemgas oder in einem Ausatemgas eines Lebewesens. Die Erfindung umfasst sowohl Sensoranordnungen, in denen das Phänomen des Paramagnetismus von Gasen als Messeffekt ausgenutzt wird, wie auch Sensoranordnungen, in denen ein Grad an Absorption von infrarotem Licht als Messeffekt ausgenutzt wird, wie auch Sensoranordnungen, in denen die Unterschiedlichkeit in der Wärmeleitfähigkeit verschiedener Gase als Messeffekt ausgenutzt wird.

Es ist bekannt, die Zusammensetzung von Atemgasen optisch zu vermessen. Als Maß für die Konzentration des jeweiligen Gases dient hierbei die Absorption des Lichts in einem bestimmten, für das jeweilige Gas spezifischen Wellenlängenbereich. Auf diese Weise werden im medizinischen Bereich - insbesondere während der Durchführung einer Anästhesie eines Lebewesens - im Atemgasgemisch von beatmeten Patienten unter anderem die Konzentrationen volatiler Anästhesiegase, Kohlendioxid (CO2) sowie Lachgas (N2O) gemessen.

In der US5739535B ist eine infrarot-optische Gasmessvorrichtung beschrieben. Aus der US8399839B ist ein infrarot-optischer Kohlenstoffdioxidsensor, ein sogenannter IR-Kohlenstoffdioxidsensor, bekannt. Aus der US6571622B ist ein Kombinationssensor aus einem infrarot-optischen Kohlenstoffdioxidsensor mit einem Durchflusssensor bekannt, welcher im Hauptstrom (main stream) im Atemgasweg eines Patienten angeordnet werden kann. Aus der US2004238746A, US2002036266A sind infrarot-optische Kohlenstoffdioxidsensoren bekannt, welche im Nebenstrom (side stream) im bzw. am Atemgasweg eines Patienten angeordnet werden können. Die US6954702B, US7606668B, US8080798B, US7501630B, US7684931B, US7432508B, US7183552B zeigen Gasmesssysteme zur Erfassung von Gaskonzentrationen im Nebenstrom (side stream) und Hauptstrom (main stream).

Die EP3421947 B1 zeigt ein Verfahren zum Betreiben einer Durchflusssensorvorrichtung mit einer ersten Sensoranordnung zum Messen eines Durchflusses eines Fluids und einer ersten Fluideigenschaft und mit einer zweiten Sensoranordnung zum Messen einer weiteren zweiten Fluideigenschaft unter Verwendung von Thermoelementen oder Thermosäulen. Die US 6,779,395 B2 zeigt eine Vorrichtung zur Messung des Durchflusses eines Fluids mit einem Hauptkanal und einem Bypass. Die US 9,952,079 B2 zeigt einen Sensor, der einem Fluid im Bypasskanal ausgesetzt wird und einen Wert misst, der sich auf die Durchflussmenge des durch den Bypasskanal fließenden Fluids bezieht.

Zur Bestimmung der Sauerstoffkonzentration in Gasen werden häufig paramagnetische Verfahren verwendet, die auf der Tatsache basieren, dass Sauerstoffmoleküle aufgrund ihres permanenten magnetischen Dipolmoments paramagnetisch sind, wohingegen die meisten anderen Gase diamagnetische Eigenschaften aufweisen. Es ist allgemein bekannt, dass sich bei paramagnetischen Gasen unter Einfluss magnetischer Felder die Wärmeleitfähigkeit ändert. Die Ursache dieses Verhaltens ist offenbar die Tatsache, dass paramagnetische Gase ein permanentes magnetisches Moment besitzen, das jedoch normalerweise, und zwar aufgrund der thermischen Molekularbewegung der Gasmoleküle, nach außen nicht in Erscheinung tritt. Ein ausreichend starkes externes Magnetfeld sorgt aber dafür, dass die magnetischen Dipolmomente der einzelnen Moleküle ausgerichtet werden. Dies bewirkt einerseits eine Änderung der Suszeptibilität, was eine Erhöhung des magnetischen Flusses zur Folge hat, andererseits stellt sich im Gas eine gewisse Molekülanordnung ein, wodurch die Freiheitsgrade und damit die Möglichkeiten, über Stöße Wärmeenergie an benachbarte Moleküle zu übertragen, eingeschränkt werden. Dadurch verändert sich in einem geringen Maße die Wärmeleitfähigkeit des Gases. Paramagnetische Messeinrichtungen zur Bestimmung von Sauerstoffkonzentrationen, insbesondere auch in Atemgasen, sind beispielsweise aus der US6952947 BB, US2011094293 AA, US8596109 BB, US9360441 BB, US6895802 BB, US6405578 BB, US6430987 BA, US4808921 A, US4683426 A, US3646803 A, US3584499 A, US2944418 A bekannt.

Die US6430987 BA zeigt einen paramagnetischen Gassensor zur Bestimmung von Sauerstoffkonzentrationen. Es sind thermoelektrische Elemente in einer Magnetfeldanordnung angeordnet. Mittels einer Wärmeflussmessung ohne einen Einfluss sowie unter Einfluss des Magnetfeldes kann eine Sauerstoffkonzentration in einem Gasgemisch ermittelt werden.

In aktuellen Ausgestaltungen für Gasmessaufgaben zu einer Analyse einer Gaszusammensetzung bei der Durchführung einer Anästhesie eines Lebewesens werden zumeist zwei oder drei der zuvor genannten Messaufgaben, also Durchflussmengenmessung, Sauerstoffkonzentrationsmessung, Anästhesiegaskonzentrationsmessung zumeist in einer seriellen Anordnung zu einem Messsystem zusammengestellt. Die serielle Anordnung bedingt, dass beispielsweise ein Messwert einer Durchflussmenge und ein Messwert der Sauerstoffkonzentrationsmessung nicht zeitgleich erfassbar sind oder zum gleichen Zeitpunkt erfasste Messwerte nicht den gleichen Strömungszustand des Gasgemisches im Hinblick auf den Verlauf von Einatmung und Ausatmung des Lebewesens unterhalb der Durchführung der Anästhesie aufweisen.

Ausgehend vom Stand der Technik ergibt sich daher die Aufgabenstellung, eine Sensoranordnung auszugestalten, welche basierend auf Thermoelementen oder Thermosäulen ein integriertes Messsystem bereitstellt, welches in der Lage ist, Konzentrationen von Sauerstoff und Durchflussmengen gleichzeitig zu erfassen.

Vorzugsweise können die Thermoelemente oder Thermosäulen zur Ausgestaltung von Lösungen der Aufgabenstellung als mikrostrukturierte Bauteile, insbesondere Halbleiterstrukturen in Form von sogenannten Micro-Electro-Mechanical- Systems (MEMS) ausgestaltet werden.

Die Aufgabe wird gelöst durch ein Messsystem mit den Merkmalen des Patentanspruchs 1.

Vorteilhafte Weiterbildungen sind in den Unteransprüchen angegeben, welche teilweise unter Bezugnahme auf die Figuren näher erläutert werden.

Eine erfindungsgemäße Sensoranordnung ist zu einer Bestimmung von physikalischen oder chemischen Eigenschaften eines Gases oder Gasgemisches ausgebildet.

Dazu weist die Sensoranordnung mindestens ein planar ausgebildetes Trägerelement und eine Anzahl von mindestens zwei Sensorelementen auf.

Die mindestens zwei Sensorelemente sind dabei auf einer Oberfläche des mindestens einen planar ausgebildeten Trägerelementes angeordnet.

Das Trägerelement und die mindestens zwei Sensorelemente sind als eine integrierte Anordnung in einem gemeinsamen Gas- oder Strömungsraum angeordnet und bilden damit die Sensoranordnung erfindungsgemäß aus.

In dem gemeinsamen Gas- oder Strömungsraum kann eine gleichzeitige Messwerterfassung der Messelemente zu einem gleichen Strömungszustand im gemeinsamen Gas- oder Strömungsraum erfolgen.

Das Trägerelement ist zumindest teilweise als ein Halbleitersubstrat ausgebildet.

Das Trägerelement kann zumindest teilweise als ein Keramikträgerelement oder als ein Folienträgerelement (flexible PCB) ausgebildet sein. Die mindestens zwei Sensorelemente sind als Thermoelemente oder als Thermosäulen ausgebildet. Thermosäulen werden oftmals auch als Thermopiles bezeichnet.

Mindestens eines der zwei Sensorelemente ist sensitiv auf eine Einstrahlung im infraroten Bereich von 3 µm - 12 µm ausgebildet und zu einer Erfassung von Strahlungsmengen im infraroten Bereich von 3 µm - 12 µm vorgesehen.

Es ist eine Anordnung mit einer Strahlungsquelle zu einer Abstrahlung von infraroter Strahlung im infraroten Bereich von 3 µm - 12 µm in oder an dem Strömungsraum oder an oder auf dem mindestens einen Trägerelement mit angeordnet.

In optionalen Ausgestaltungen der Anordnung mit der Strahlungsquelle kann optional ein Spiegelelement vorgesehen sein, das die infrarote Abstrahlung der Strahlungsquelle zu dem Sensorelement hin lenkt.

Mindestens eines der mindestens zwei Sensorelemente bildet mit der Strahlungsquelle ein Messmodul zu einer infrarotoptischen Gaskonzentrationsmessung aus. Ein weiteres der als Thermoelement oder Thermosäule ausgebildeten mindestens zwei Sensorelemente bildet ein Messmodul zu einer Strömungs- oder Durchflussmengenmessung aus.

Nachfolgend werden bevorzugte und vorteilhafte Ausführungsformen der erfindungsgemäßen Sensoranordnung angegeben.

In einer besonders bevorzugten Ausführungsform kann die Sensoranordnung ein planar ausgebildetes Trägerelement aufweisen, auf welchem drei Sensorelemente angeordnet sind. In dieser besonders bevorzugten Ausführungsform sind die drei Sensorelemente auf Oberflächen des mindestens einen planar ausgebildeten Trägerelementes in einem gemeinsamen Gas- oder Strömungsraum angeordnet. Das Trägerelement ist zumindest teilweise als ein Halbleitersubstrat ausgebildet. Die drei Sensorelemente sind als Thermoelemente oder als Thermosäulen ausgebildet. Es ist eine Anordnung mit einer Strahlungsquelle zu einer Abstrahlung von infraroter Strahlung im infraroten Bereich von 3 µm - 12 µm in oder an dem Strömungsraum oder an oder auf dem mindestens einen Trägerelement mit angeordnet. In optionalen Ausgestaltungen der Anordnung mit der Strahlungsquelle kann ein optionales Spiegelelement vorgesehen sein, das die infrarote Abstrahlung der Strahlungsquelle zu dem Sensorelement hin lenkt. An dem Trägerelement ist eine Anordnung von zwei Elementen aus einem magnetisch leitenden Material angeordnet. In dieser bevorzugten Ausführungsform bildet eines der als Thermoelement oder Thermosäule ausgebildeten zwei Sensorelemente mit der Anordnung der zwei zur Führung eines Magnetfeldes ausgebildeten Elemente ein Messmodul zu einer paramagnetischen Gaskonzentrationsmessung aus. In dieser bevorzugten Ausführungsform ist eines der drei Sensorelemente sensitiv auf eine Einstrahlung im infraroten Bereich von 3 µm - 12 µm ausgebildet und zu einer Erfassung von Strahlungsmengen im infraroten Bereich von 3 µm - 12 µm vorgesehen und bildet mit der Strahlungsquelle ein Messmodul zu einer infrarot- optischen Gaskonzentrationsmessung aus.

In dieser bevorzugten Ausführungsform bildet eines der drei Sensorelemente ein Messmodul zu einer Strömungs- oder Durchflussmengenmessung aus.

In einer weiter bevorzugten Ausführungsform der Sensoranordnung können die mindestens zwei Messmodule eine Messanordnung ausbilden, wobei die mindestens zwei Messmodule zumindest teilweise auf Oberflächen eines gemeinsamen, planar ausgebildeten Trägerelementes angeordnet sein können. Diese Ausführungsform bietet den Vorteil eines integrierten Messsystems, bei welchem das Trägerelement als eine Art Plattform für die Anordnung von Messmodulen ausgebildet ist.

In einer weiter bevorzugten Ausführungsform der Sensoranordnung oder Messanordnung kann mindestens ein weiteres Sensorelement oder Messmodul auf dem mindestens einen planaren Trägerelement mit angeordnet sein. Dabei kann das weitere Sensorelement oder Messmodul
- als ein Thermoelement oder als eine Thermosäule;
- als ein thermoelektrisches Sensorelement;
- als ein optisch sensitives Sensorelement;
- als ein resistives Sensorelement;
- als ein piezoelektrisches Sensorelement;
- als ein katalytisches Sensorelement;
- oder als ein piezoresistives Sensorelement
ausgebildet sein. Diese Ausführungsform bietet den Vorteil, ein multifunktionales, integriertes Messsystem zu einer Überwachung von Anästhesie oder Beatmung eines Patienten oder Lebewesens in einer mikrostrukturierten Technologie (MEMS) ausgestalten zu können. Damit können dann je nach Anwendungsfall und Messaufgaben die unterschiedlichen Sensorelemente in den Messvorgang und die Datenerfassung einbezogen werden. Mit einem solch multifunktionalen, integrierten Messsystem kann eine Vielzahl von Messwerten und Daten bereitgestellt werden, die von unterschiedlichen Anwendungen auf einem Medizintechniksystem für die Begleitung von Patienten im medizintechnischen Umfeld verwendet werden können. Zudem können diese so gewonnenen Daten mithilfe von Schnittstellen in einem Kommunikationsumfeld (Netzwerkumgebung: LAN, WLAN, etc.) verteilt werden.

In einer bevorzugten Ausführungsform der Sensoranordnung oder Messanordnung können die mindestens zwei Messmodule und das weitere Sensorelement oder Messmodul auf Oberflächen eines gemeinsamen, planar ausgebildeten Trägerelementes angeordnet sein. Auch diese Ausführungsform bietet den Vorteil eines weiter integrierten Messsystems, bei welchem das Trägerelement als eine Art Plattform für die Anordnung von Messmodulen ausgebildet ist.

In einer bevorzugten Ausführungsform der Sensoranordnung oder Messanordnung kann der gemeinsame Gas- oder Strömungsraum ein zu einer Strömungsführung eines Gasgemisches ausgebildetes Gehäuseelement oder eine Messküvette ausbilden.

In einer weiter bevorzugten Ausführungsform kann die Messanordnung eine Betriebselektronik aufweisen, welche zu einer Inbetriebnahme, Justierung oder Kalibrierung der Messanordnung und/oder einer Koordination eines Messbetriebes der Messanordnung, der Sensoranordnung und/oder der Sensorelemente ausgebildet ist,
- wobei mindestens eines der Sensorelemente oder eines der Messmodule in Zusammenwirkung mit der Betriebselektronik eine messtechnische Funktion eines Strömungs- oder Durchflussmengensensors ausbildet
- oder wobei mindestens eines der Sensorelemente oder eines der Messmodule in Zusammenwirkung mit der Betriebselektronik, den Elementen zur Führung des Magnetfeldes und einer Spulenanordnung eine messtechnische Funktion eines paramagnetischen Sauerstoffsensors ausbildet
- oder wobei mindestens eines der Sensorelemente oder eines der Messmodule in Zusammenwirkung mit der Betriebselektronik, Strahlungsquelle und mindestens einem optischen Filterelement eine messtechnische Funktion eines infrarot- optischen Gassensors ausbildet.

Die Betriebselektronik weist vorzugsweise eine Recheneinheit, etwa in Ausgestaltung als Mikrocontroller o.ä. (µC, µP, DSP, FPGA, ASIC, GAL) und einen Datenspeicher (RAM, ROM) auf. Die Betriebselektronik mit Recheneinheit (µC, µP, DSP, FPGA, ASIC, GAL), Datenspeicher (RAM, ROM) ist ausgebildet, Konvertierungen, Linearisierungen, Umrechnungen der Messwerte der Messmodule vorzunehmen und mittels der Schnittstellen (USB, SPI, I²C, 1-Wire) einem Medizingerät (Anästhesiegerät, Beatmungsgerät, Wärmetherapiegerät, Physiologisches Überwachungssystem (PPM)) oder einem Datennetzwerk (LAN, WLAN) Verb?!. Im Datenspeicher können beispielsweise Kennlinien oder Datenfelder (Array, Vektor) abgelegt sein, welche von der Recheneinheit zu Signalaufbereitung, Signalwandlung, Signalkonvertierung in die quantitative und/oder qualitative Bestimmung von Messgrößen, wie etwa Durchflussmengen, Gaskonzentrationen, Temperaturen, mit einbezogen werden können. Auch ist es möglich, typische und spezifische Kalibrierdaten oder Informationen (Offset, Gain, Drift) der Messmodule oder Sensorelemente im Datenspeicher abzulegen und im Betrieb zu nutzen, um eine verbesserte Genauigkeit oder Zuverlässigkeit des Messsystems zu ermöglichen.

Bevorzugte besondere Ausführungsformen können gebildet werden, indem weitere Bauteile, Baugruppen oder Elemente in oder an dem Trägerelement oder dem Gehäuseelement angeordnet werden. So kann die Sensoranordnung an dem mindestens einen planaren Trägerelement angeordnet sein.

In einer besonderen Ausführungsform kann das mindestens eine optische Filterelement an dem mindestens einen planaren Trägerelement angeordnet sein.

In einer besonderen Ausführungsform kann das mindestens eine optische Filterelement an dem Gehäuseelement angeordnet sein.

In einer besonderen Ausführungsform kann das mindestens eine optische Filterelement als ein Teil des Gehäuseelementes ausgebildet sein.

In einer besonderen Ausführungsform kann die Strahlungsquelle an dem mindestens einen planaren Trägerelement angeordnet sein.

In einer besonderen Ausführungsform kann die Strahlungsquelle an dem Gehäuseelement angeordnet sein.

In einer besonderen Ausführungsform kann die Strahlungsquelle als Teil des Gehäuseelementes ausgebildet sein.

In einer besonderen Ausführungsform kann das Spiegelelement an dem mindestens einen planaren Trägerelement angeordnet sein.

In einer besonderen Ausführungsform kann das Spiegelelement an dem Gehäuseelement angeordnet sein.

In einer besonderen Ausführungsform kann das Spiegelelement als Teil des Gehäuseelementes ausgebildet sein.

In einer besonderen Ausführungsform kann die Spulenanordnung als ein integrativer Teil des mindestens einen planaren Trägerelementes ausgebildet oder an dem mindestens einen planaren Trägerelement angeordnet sein.

In einer bevorzugten Ausführungsform kann die Spulenanordnung an dem Gehäuseelement angeordnet sein.

In einer bevorzugten Ausführungsform kann die Spulenanordnung als ein Teil des Gehäuseelementes ausgebildet sein.

In einer bevorzugten Ausführungsform kann das Gehäuseelement mindestens einen Gaseinlass und mindestens einen Gasauslass und/oder Elemente zu einer Strömungsführung aufweisen.

In einer bevorzugten Ausführungsform können die Thermoelemente oder Thermosäulen der Sensorelemente als strukturierte Halbleiterelemente in Ausgestaltung von PN- dotierten Halbleiterelementen auf dem Halbleitersubstrat der Oberfläche des mindestens einen planar ausgebildeten Trägerelementes ausgebildet sein.

In einer weiter bevorzugten Ausführungsform kann die Messanordnung eine Bestimmung von physikalischen oder chemischen Eigenschaften eines Gases oder Gasgemisches ermöglichen. Dabei kann mindestens eines der Sensorelemente und/oder ein weiteres Sensorelement
- zu einer Druckmessung;
- zu einer Dichtemessung;
- zu einer Viskositätsmessung;
- zu einer Konzentrationsmessung;
- zu einer Wärmeleitfähigkeitsmessung;
- Durchflussmengenmessung;
- Strömungsmessung;
- Strömungsgeschwindigkeitsmessung;
- zu einer Feuchtigkeitsmessung;
- zu einer Temperaturmessung
ausgebildet sein.

Die Temperaturmessung kann beispielsweise durch einen auf dem Trägerelement angeordneten NTC- Sensor erfolgen. Damit kann sowohl eine Messung der Temperatur des Gasgemisches in dem Strömungsraum wie auch eine Messung einer Oberflächentemperatur des Trägerelementes ermöglicht sein.

In einer bevorzugten Ausführungsform kann die Betriebselektronik zumindest teilweise mit den Sensorelementen auf dem planar ausgebildeten, gemeinsamen Trägerelement angeordnet sein, und das planar ausgebildete, gemeinsame Trägerelement kann in einen gemeinsamen Gas- und Strömungsraum integriert angeordnet sein.

Auch diese bevorzugte Ausführungsform bietet den Vorteil eines weiter integrierten, in diesem Fall hochintegrierten Messsystems, bei welchem das Trägerelement als eine Art Plattform für die Anordnung von Messmodulen und Elektronik ausgebildet ist. Die Betriebselektronik mit Recheneinheit (µC, µP, DSP, FPGA, ASIC, GAL), Datenspeicher (RAM, ROM) ist ausgebildet, Konvertierungen, Linearisierungen, Umrechnungen der Messwerte der Messmodule vorzunehmen und mittels der Schnittstellen (Bussysteme, wie USB, SPI, I²C, 1-Wire) einem Medizingerät (Anästhesiegerät, Beatmungsgerät, Wärmetherapiegerät, Physiologisches Überwachungssystem (PPM)) oder einem Datennetzwerk (LAN, WLAN) bereitzustellen. Im Datenspeicher können beispielsweise Kennlinien oder Datenfelder (Array, Vektor) abgelegt sein, welche von der Recheneinheit zu Signalaufbereitung, Signalwandlung, Signalkonvertierung in die quantitative und/oder qualitative Bestimmung von Messgrößen, wie etwa Durchflussmengen, Gaskonzentrationen, Temperaturen, mit einbezogen werden können. Auch ist es möglich, typische und spezifische Kalibrierdaten oder Informationen (Offset, Gain, Drift) der Messmodule oder Sensorelemente im Datenspeicher abzulegen und im Betrieb zu nutzen, um eine verbesserte Genauigkeit oder Zuverlässigkeit des Messsystems zu ermöglichen. Dies Ausführungsform mit einer "On-Chip"- Integration von Elektronikbauteilen zur Signalverarbeitung, Recheneinheit (µC), Datenspeichern (RAM, ROM) und Schnittstellen (Bussysteme, wie USB, SPI, I²C, 1-Wire) bietet die Möglichkeit, die Messwerterfassung mit Messgrößen zu Eigenschaften von Gasgemischen mit Strömungsgeschwindigkeiten, Durchflussmengen Konzentrationen von Gasbestandteilen im Gasgemisch, Dichte, Viskosität, Temperatur- und Druckniveau oder Feuchtigkeitsgehalt im Gasgemisch und zeitliche Veränderungen des Feuchtigkeitsgehalts oder Temperatur- und Druckniveaus im Gasgemisch durchzuführen. Dies ermöglicht auch, dabei physikalische Zustände mit dem Zyklus von Ein- und Ausatmung und Zudosierungen in das Gasgemisch im Zuge einer Durchführung einer Beatmung oder Anästhesie in Echtzeit in einem gemeinsamen Strömungsraum zu erfassen. Zudem können dabei gegebenenfalls erforderliche Anpassungen der Signalverarbeitung, Signalfilterungen, Signalkorrekturen, Berechnungen (Max, Min, Mittelwert), Normierungen oder Linearisierungen in Echtzeit für mehrere Messgrößen vorgenommen werden. Es kann somit ein Datensatz bereitgestellt werden, welcher die physikalische Situation im gemeinsamen Gasraum an einem identischen Ort und zu einem identischen Zeitpunkt beschreibt und in Form mehrerer Messgrößen enthält.

In einer weiter bevorzugten Ausführungsform kann mit drei Sensorelementen eine der folgenden Anordnungen zur Bestimmung von physikalischen oder chemischen Eigenschaften eines Gases oder Gasgemisches auf dem mindestens einen planaren Trägerelement ausgebildet werden:
- Anordnung zu Strömungs- oder Durchflussmengenmessung,
   Sauerstoffstoffkonzentrationsmessung und Gaskonzentrationsmessung für einen weiteren Gasbestandteil oder einen Feuchtigkeitsanteil im Gas oder Gasgemisch;
- Anordnung zu Strömungs- oder Durchflussmengenmessung und
   Sauerstoffstoffkonzentrationsmessung und Temperaturmessung;
- Anordnung zu Strömungs- oder Durchflussmengenmessung,
   Sauerstoffstoffkonzentrationsmessung und Druckmessung;
- Anordnung zu Strömungs- oder Durchflussmengenmessung,
   Sauerstoffstoffkonzentrationsmessung und Dichtemessung;
- Anordnung zu Sauerstoffstoffkonzentrationsmessung, Gaskonzentrationsmessung für einen weiteren Gasbestandteil oder einen Feuchtigkeitsanteil im Gas oder Gasgemisch und Temperaturmessung;
- Anordnung zu Sauerstoffstoffkonzentrationsmessung, Gaskonzentrationsmessung für einen weiteren Gasbestandteil oder einen Feuchtigkeitsanteil im Gas oder Gasgemisch und Druckmessung;
- Anordnung zu Sauerstoffstoffkonzentrationsmessung, Gaskonzentrationsmessung für einen weiteren Gasbestandteil oder einen Feuchtigkeitsanteil im Gas oder Gasgemisch und Dichtemessung;
- Anordnung zu Sauerstoffstoffkonzentrationsmessung, Druckmessung und Dichtemessung.

Die erfindungsgemäße Sensoranordnung und die Messanordnung bieten somit eine kostengünstige und praxisnahe Lösung für die integrative gemeinsame messtechnische Erfassung und Überwachung von Gaskonzentrationen (Sauerstoff, Anästhesiegas) und von Durchflussmengen an.

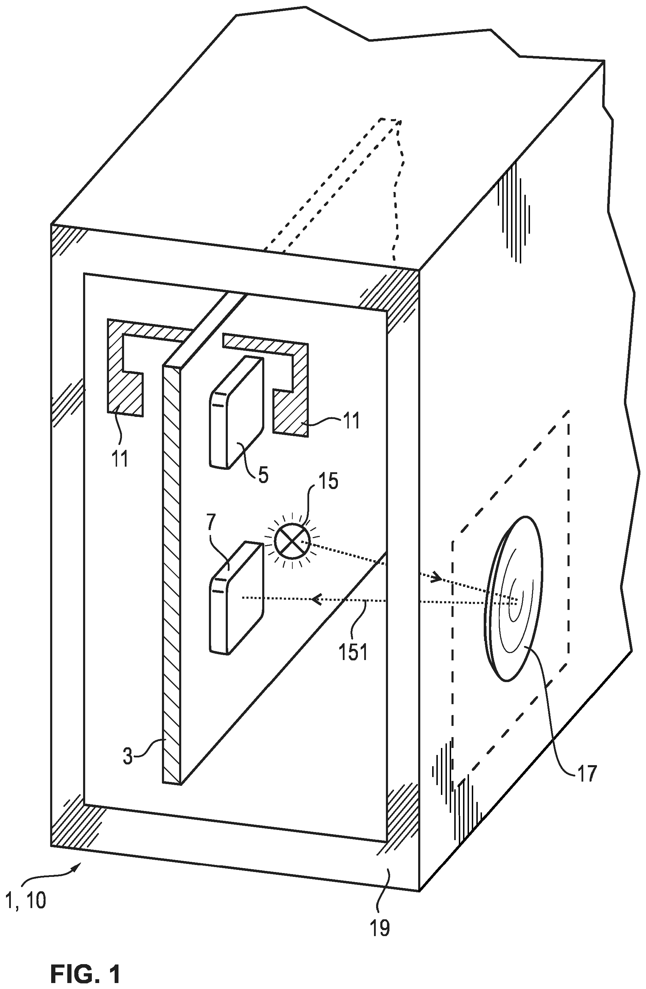

Anhand der nachfolgenden Beschreibung wird unter teilweiser Bezugnahme auf die Figuren 1, 2, 3a, 3b 4, 5, 6a, 6b, 6c die Erfindung näher erläutert. Gleiche Elemente in den Figuren 1, 2, 3a, 3b 4, 5, 6a, 6b, 6c sind in den Figuren 1, 2, 3a, 3b, 4, 5, 6a, 6b, 6c mit identischen Bezugszeichen oder Bezugsziffern bezeichnet.

Es zeigen:
- Fig. 1:: Perspektivische Ansicht einer Messküvette;
- Fig. 2:: Ansicht der Messküvette nach Figur 1 in Einströmrichtung;
- Fig. 3a:: Draufsicht der Messküvette nach Figur 1;
- Fig. 3b:: Draufsicht einer Variante der Messküvette nach den Figuren 1, 3a;
- Fig. 4:: Erweiterung der Messküvette nach der Figur 2;
- Fig. 5:: Erweiterung der Messküvette nach der Figur 1;
- Fig. 6a, 6b, 6c:: Ansichten eines Trägerelementes.

In der Figur 1 wird in einer perspektivischen Ansicht eine Messküvette 19 als Gehäuse bzw. Gehäuseelement als ein gemeinsamer Gas- und Strömungsraum gezeigt. Dargestellt werden die Messküvette 19, ein Spiegelelement 17 an einer rechten Seitenwand der Messküvette 19, eine Sensoranordnung 1, ein Trägerelement 3 mit einer Strahlungsquelle 15, ein erstes Sensorelement (O₂) 5 und ein zweites Sensorelement (IR) 7, sowie Elemente 11 zu einer Führung eines Magnetfeldes an dem Trägerelement 3. Das Spiegelelement 17 lenkt die infrarote Abstrahlung 151 der Strahlungsquelle 15 zu dem zweiten Sensorelement (IR) 7 hin.

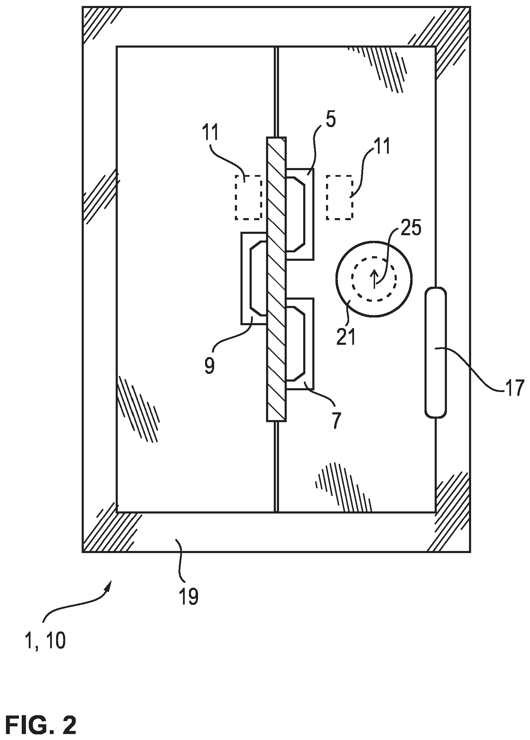

Die Figur 2 zeigt eine Ansicht der Messküvette nach der Figur 1 in Einströmrichtung mit einem Spiegelelement 17 an der rechten Seitenwand der Messküvette 19 mit dem Trägerelement 3 in der Mitte, dem erstem Sensorelement (O₂) 5, dem zweiten Sensorelement (IR) 7 und einem dritten Sensorelement (Flow) 9, mit einem Gaszutritt 21 für die Einströmung 25 von Gasmengen in die Messküvette 19 und eine Strömungsteilung zur Verteilung der eingeströmten Gasmengen zu den Sensorelementen 5, 7, 9. Die Elemente 11 zu einer Führung eines Magnetfeldes sind in der Figur 2 andeutungsweise dargestellt.

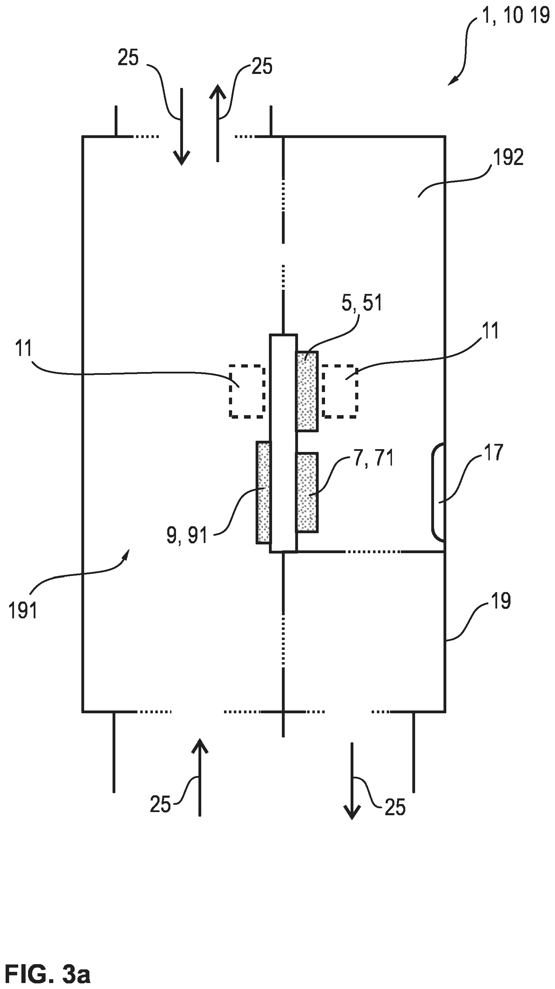

Die Figur 3a zeigt eine Draufsicht der Messküvette 19 nach der Figur 1.

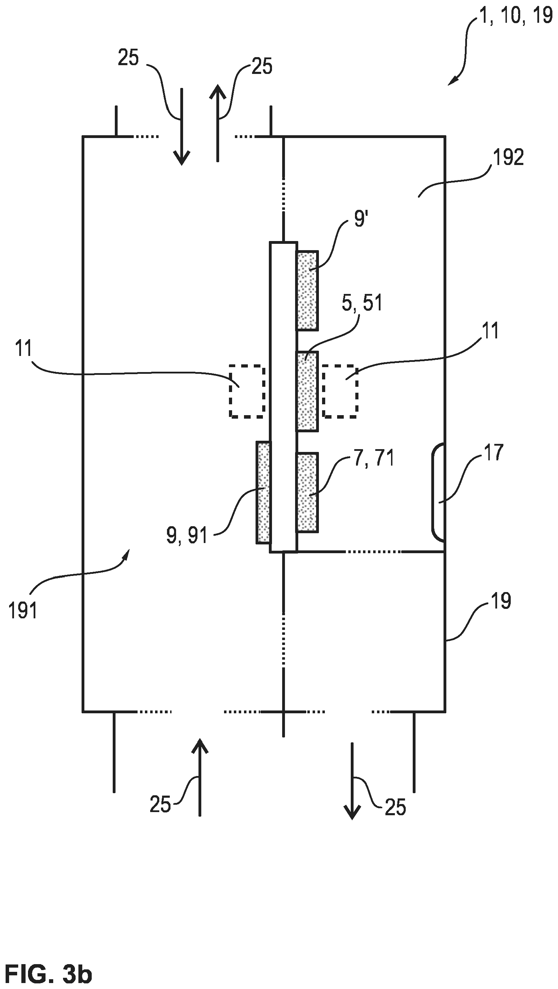

Die Figur 3b zeigt eine Draufsicht einer Variante der Messküvette 19 nach der Figur 1.

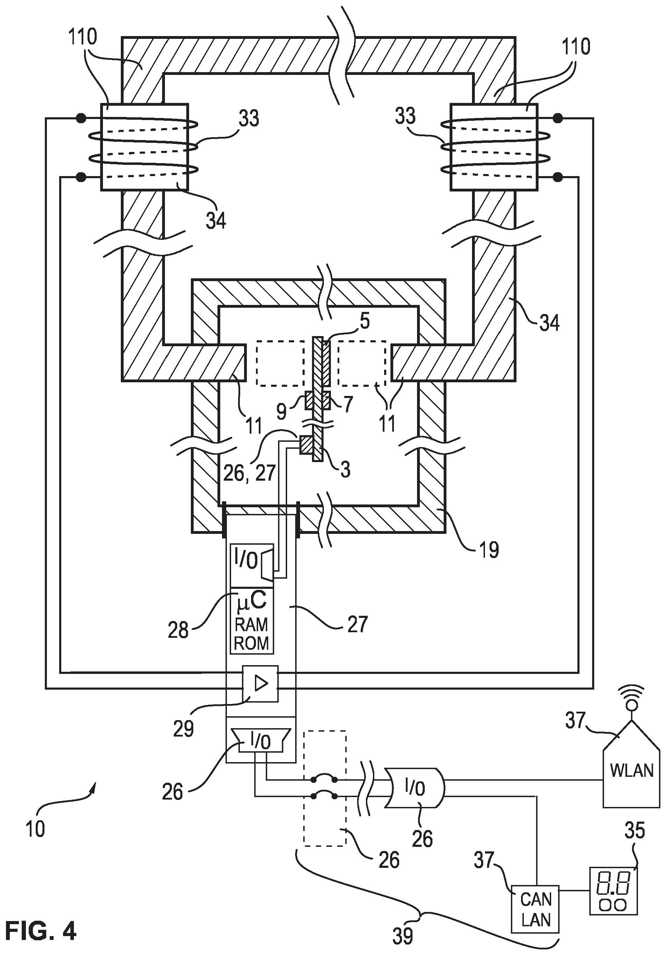

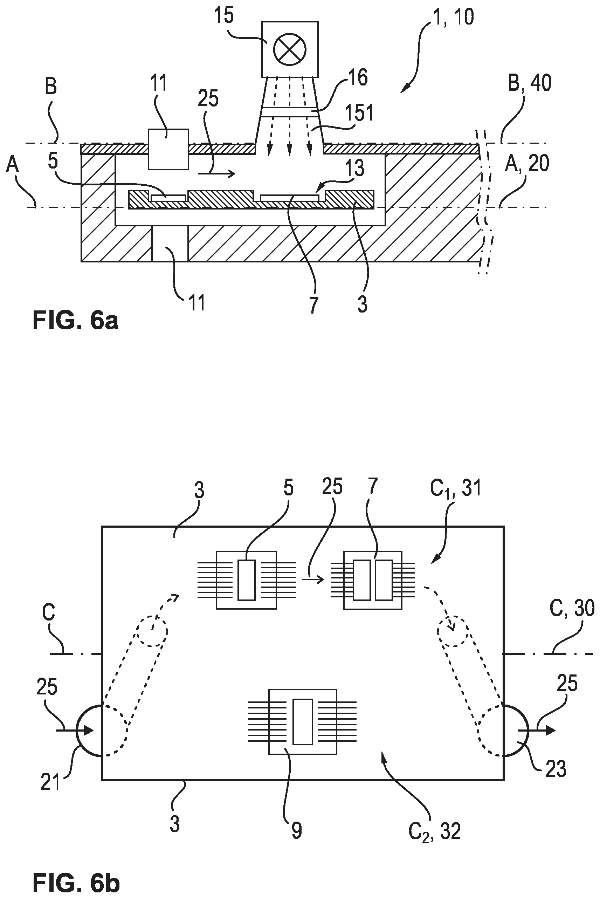

Gezeigt sind in den Figuren 3a, 3b die Messküvette 19 mit einem Spiegelelement 17 an der rechten Seitenwand der Messküvette 19 mit dem Trägerelement 3 in der Mitte, mit Darstellung einer Strömung 25 in und durch die Messküvette 19 hindurch. Die Elemente 11 zu einer Führung eines Magnetfeldes sind in der Figur 3a andeutungsweise dargestellt. In der Messküvette 19 sind Wandungen und Strömungsbarrieren angeordnet, wodurch sich in der Messküvette 19 ein erster Raum 191 und ein zweiter Raum 192 als "Bypass" als ein "strömungsberuhigter Raum" ausbildet. In den ersten Raum 191 kann eine Hauptströmung einströmen, und deren Durchflussmenge kann mittels des dritten Sensorelementes (Flow) 9 nach Richtung und Größe messtechnisch erfasst werden. In den zweiten Raum 192 gelangt eine Teilströmung zu dem ersten Sensorelement (O₂) 5 und dem zweiten Sensorelement (IR) 7. Das erste Sensorelement 5 ist in Zusammenwirkung mit den Elementen 11 zu einer Führung eines Magnetfeldes zu einer messtechnischen Erfassung einer Sauerstoffkonzentration in dem zweiten Raum 192 der Messküvette 19 angeordnet und ausgebildet. Das zweite Sensorelement (IR) 7 ist in Zusammenwirkung mit der Strahlungsquelle 15 zu einer messtechnischen Erfassung einer Konzentration eines weiteren Gases, beispielsweise Kohlenstoffdioxid (CO₂) in dem zweiten Raum 192 der Messküvette 19 angeordnet und ausgebildet. Die Sensorelemente 5, 7, 9 können mit den Elektronik- Komponenten 27 (Figur 4), Schnittstellen 26 (Figur 4), der Strahlungsquelle 15 (Figur 1), Spiegelelement 17, optischen Filterelement (16)en 16 (Figur 6a), Kontrolleinheit 28 (Figur 4), Elementen zur Signalverarbeitung (OP- Amp's, Filter) (Figur 4) jeweils Messmodule 51, 71, 91 ausbilden.

In der Figur 3a sind zwei Sensorelemente 5 (O₂), 7 (IR) auf einer Seite des Trägerelementes 3 , während in dem ersten Raum auf der gegenüberliegenden Seite des Trägerelementes 3 das Sensorelement 9 (Flow, Flow_1) angeordnet ist.

In der Figur 3b ist im Unterschied zur Figur 3a in dem zweiten Raum 192 der Messküvette 19 ein zusätzliches Sensorelement 9' (Flow_2) angeordnet. Dieses zusätzliche Sensorelement 9' ist derart angeordnet, dass damit eine messtechnische Erfassung von Strömungssituationen im zweiten Raum (Bypass) ermöglicht ist. Das ermöglicht beispielsweise eine Überprüfung, ob in den zweiten Raum ein Gasaustausch 25 der Messküvette 19 mit der Außenwelt gegeben ist.

In alternativen Ausgestaltungen kann die Aufteilung der Strömung 25 zwischen dem ersten Raum 191 und dem zweiten Raum 192 durch eine "Flowaufteilung" als Aufteilung in einem definierten Verhältnis, z.B. im Verhältnis 10:1 erfolgen. Auf dieses Weise kann für einen vorbestimmten Messbereich der Durchflussmenge mittels des zusätzlichen Sensorelementes 9' im zweiten Raum 192 auch mittelbar die Durchflussmenge durch den ersten Raum 191 bestimmt werden. In solch einer Konstellation ist das Sensorelement 9 (Flow_1) im ersten Raum 191 optional und kann in alternativen Ausgestaltungen der Messküvette 19 auch entfallen, so dass sämtliche Sensorelemente (5, 7, 9') auf derselben Oberfläche des Trägerelementes 3 angeordnet sein können.

Die Figur 4 zeigt eine Erweiterung der Messküvette nach der Figur 2 mit Sensoranordnungen 5, 7, 9, Schnittstellen 26 und/oder Elektronik- Komponenten 27 auf dem Trägerelement 3, sowie einer Anordnung von Elementen 11 zur Führung des Magnetfeldes mit einer Spulenanordnung 33 mit einem Eisenkern 34. Die Elektronik- Komponenten 27 können zumindest teilweise auf dem Trägerelement 3, wie auch zumindest teilweise an der Messküvette 19 angeordnet sein und umfassen eine Kontrolleinheit (µC, ADµC) 28, Elemente 29 zur Signalverarbeitung (OP- Amp's, Filter) wie auch Schnittstellen (USB, SPI, I²C, 1-Wire) 26 zu Möglichkeiten von Anbindungen 39, wie Energieversorgungsanbindung und Datenanbindung an Netzwerke 37, Gerätschaften oder externe Apparate 35.

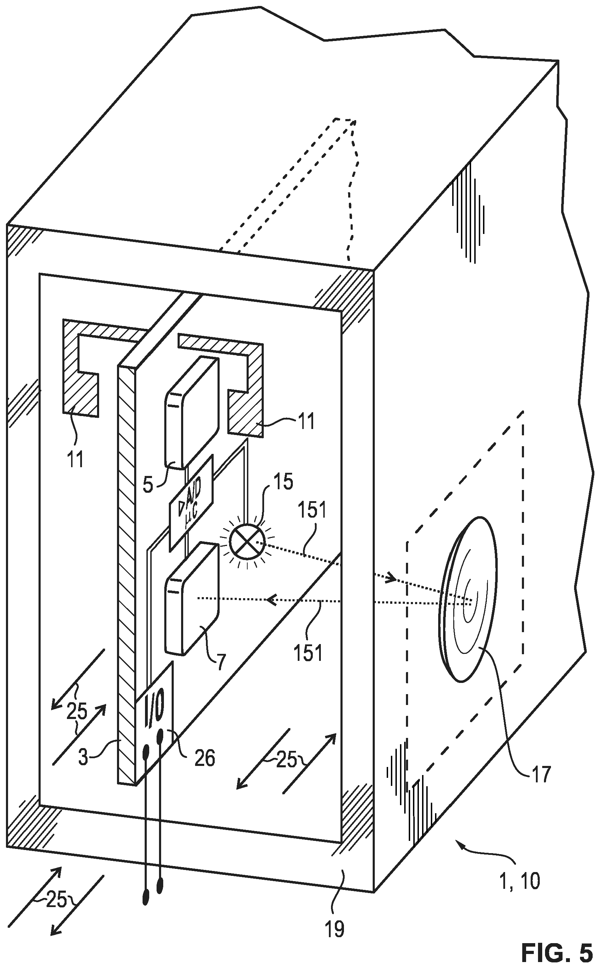

Die Figur 5 zeigt eine Erweiterung der Messküvette 19 nach der Figur 1 bzw. eine Variante der Ausgestaltung nach der Figur 4 in schematisch vereinfachter Darstellung mit Elektronik-Komponenten 27 auf dem Trägerelement 3, sowie einer Anordnung von Elementen 11 zur Führung des Magnetfeldes. Die Elektronik- Komponenten 27 umfassen eine Kontrolleinheit (µC, ADµC) 28, Elemente zur Signalverarbeitung (OP- Amp's, Filter) 29 und auch Schnittstellen (USB, SPI, I²C, 1-Wire) 26.

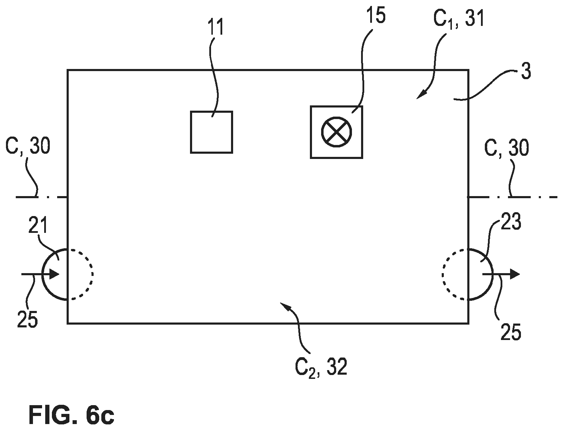

Die Figuren 6a, 6b, 6c zeigen schematische Ansichten des Trägerelementes mit einer beispielhaften Anordnung von drei Sensorelementen 5, 7, 9. Die Figur 6a zeigt in einer Schnittdarstellung eine schematische Seitenansicht eines Trägerelementes 3 in der Messküvette 19 mit Sensorelementen 5, 7, 9, einer Strahlungsquelle 15 und Elementen 11 zur Führung des Magnetfeldes. Sichtbar ist ein Bereich C1 31 einer Oberfläche 13 des Trägerelementes 3 oberhalb der Schnittlinie C 10 nach der Figur 6b.

Die Figur 6b zeigt eine schematische Sicht des Trägerelementes 3 in der Zeichnungsebene A 20 des Trägerelementes 3 nach der Figur 6a. Sichtbar sind dabei drei Sensorelemente 5, 7, 9 auf dem Trägerelement 3. Ein Gaseinlass 21, ein Gasauslass 23 mit Strömungspfeilen 25, welche Einströmung und Ausströmung symbolisieren sollen, sind andeutungsweise dargestellt.

Die Figur 6c zeigt eine schematische Sicht des Trägerelementes 3 in der Zeichnungsebene B 40 des Trägerelementes 3 nach der Figur 6a. Sichtbar sind dabei das Trägerelement 3, die Strahlungsquelle 15 und die Elemente 11 zur Führung des Magnetfeldes.

### Bezugsziffernliste

- 1: Sensoranordnung
- 3: Trägerelement
- 5, 7, 9: Sensorelemente
- 10: Messanordnung
- 11: Elemente aus magnetisch leitendem Material
- 13: Oberfläche des Trägerelementes
- 15: Strahlungsquelle
- 151: infrarote Abstrahlung
- 16: optische Filterelemente (16)
- 17: Spiegelelement
- 19: Messküvette, Gehäuseelement, Gehäuse
- 191, 192: Räume in der Messküvette
- 20, 30, 40: Ebenen A, C, B
- 21: Gaseinlass
- 23: Gasauslass
- 25: Strömungspfeile
- 26: Schnittstellen (USB, SPI, I²C, 1-Wire)
- 27: Elektronik- Komponenten
- 28: Kontrolleinheit (µC, ADµC)
- 29: Elemente zur Signalverarbeitung (OP- Amp's, Filter)
- 31: Bereich C1 des Trägerelementes
- 32: Bereich C2 des Trägerelementes
- 33: Spulenanordnung
- 34: Eisenkern
- 35, 37, 39: Möglichkeiten zu Anbindungen
- 51, 71, 91: Messmodule
- 110: Anordnung mit Elementen 11 aus magnetisch leitendem Material oder Materialien

## Patentansprüche

1. Sensoranordnung (1) zur Bestimmung von physikalischen oder chemischen Eigenschaften eines Gases oder Gasgemisches mit mindestens einem planar ausgebildeten Trägerelement (3) und einer Anzahl von mindestens zwei Sensorelementen (5, 7, 9, 9'),
• wobei die mindestens zwei Sensorelemente (5, 7, 9, 9') auf Oberflächen (13) des mindestens einen planar ausgebildeten Trägerelementes (3) angeordnet sind,
• wobei die mindestens zwei Sensorelemente (5, 7, 9, 9') in einem gemeinsamen Gas- oder Strömungsraum (19) angeordnet sind,
• wobei das Trägerelement (3) zumindest teilweise als ein Halbleitersubstrat ausgebildet ist,
• wobei die mindestens zwei Sensorelemente (5, 7, 9, 9') als Thermoelemente oder als Thermosäulen ausgebildet sind,
• wobei an dem Trägerelement (3) eine Anordnung von zur Führung eines Magnetfeldes ausgebildeten Elementen (11) aus einem magnetisch leitenden Material angeordnet ist,
• wobei die Anordnung der Elemente (11) zur Führung eines Magnetfeldes und des mindestens einen der beiden Sensorelemente (5, 7, 9, 9') derart zueinander ausgestaltet ist, dass eine im Wesentlichen rechtwinklige Führung des Magnetfelds in Bezug auf die Oberfläche (13) des planaren Trägerelementes (3) gegeben ist,
• wobei mindestens eines der als Thermoelement oder Thermosäule ausgebildeten mindestens zwei Sensorelemente (5, 7, 9, 9') mit der Anordnung der zwei zur Führung eines Magnetfeldes ausgebildeten Elemente (11) ein Messmodul (51) zu einer paramagnetischen Gaskonzentrationsmessung ausbildet
• und wobei ein weiteres der als Thermoelement oder Thermosäule ausgebildeten mindestens zwei Sensorelemente (5, 7, 9, 9') :
∘ als ein Messmodul (71) zu einer infrarotoptischen Gaskonzentrationsmessung
∘ oder als ein Messmodul (91) zu einer Strömungs- oder Durchflussmengenmessung
ausgebildet ist.

2. Sensoranordnung (1) nach Anspruch 1 mit einem planar ausgebildeten Trägerelement (3) mit einer Anordnung von drei Sensorelementen (5, 7, 9, 9'),
• wobei die mindestens drei Sensorelemente (5, 7, 9, 9') auf Oberflächen (13) des mindestens einen planar ausgebildeten Trägerelementes (3) angeordnet sind,
• wobei die mindestens drei Sensorelemente (5, 7, 9, 9') in einem gemeinsamen Gas- oder Strömungsraum (19) angeordnet sind,
• wobei das Trägerelement (3) zumindest teilweise als ein Halbleitersubstrat ausgebildet ist,
• wobei die mindestens drei Sensorelemente (5, 7, 9, 9') als Thermoelemente oder als Thermosäulen ausgebildet sind,
• wobei eine Anordnung mit einer Strahlungsquelle (15) zu einer Abstrahlung von infraroter Strahlung im infraroten Bereich von 3 µm - 12 µm in oder an dem Strömungsraum (19) oder an oder auf dem mindestens einen Trägerelement (3) mit angeordnet ist,
• wobei an dem Trägerelement (3) eine Anordnung von zwei ausgebildeten Elementen (11) zur Führung eines Magnetfeldes aus einem magnetisch leitenden Material angeordnet ist,
• wobei die Anordnung der Elemente (11) zur Führung eines Magnetfeldes (Polschuhe) und des mindestens einen der beiden Sensorelemente (5, 7, 9, 9') derart zueinander ausgestaltet ist, dass eine im Wesentlichen rechtwinklige Führung des Magnetfelds in Bezug auf die Oberfläche (13) des planaren Trägerelementes (3) gegeben ist und eines der mindestens drei Sensorelemente (5, 7, 9, 9') mit der Anordnung der drei zur Führung eines Magnetfeldes ausgebildeten Elemente (11) ein Messmodul (51) zu einer paramagnetischen Gaskonzentrationsmessung ausbildet,
• wobei eines der drei Sensorelemente (5, 7, 9, 9') sensitiv auf eine Einstrahlung im infraroten Bereich von 3 µm - 12 µm ausgebildet und zu einer Erfassung von Strahlungsmengen im infraroten Bereich von 3 µm - 12 µm vorgesehen ist und mit der Strahlungsquelle (15) und einem optionalem Spiegelelement (17) ein Messmodul (71) zu einer infrarot- optischen Gaskonzentrationsmessung ausbildet,
• wobei eines der mindestens drei Sensorelemente (5, 7, 9, 9') als ein Messmodul (91) zu einer Strömungs- oder Durchflussmengenmessung ausgebildet ist.

3. Sensoranordnung (1) nach einem der Ansprüche 1 bis 2, wobei die mindestens zwei Messmodule (51, 71, 91) nach den Ansprüchen 1 oder 2 eine Messanordnung (10) ausbilden und wobei die mindestens zwei Messmodule (51, 71, 91) zumindest teilweise auf Oberflächen (13) eines gemeinsamen, planar ausgebildeten Trägerelementes (3) angeordnet sind.

4. Sensoranordnung (1) oder Messanordnung (10) nach einem der Ansprüche 1 bis 3, wobei mindestens ein weiteres Sensorelement (5, 7, 9, 9') oder Messmodul (51, 71, 91) auf dem mindestens einen planaren Trägerelement (3) mit angeordnet ist und:
• als ein Thermoelement oder als eine Thermosäule;
• als ein thermoelektrisches Sensorelement;
• als ein optisch sensitives Sensorelement;
• als ein resistives Sensorelement;
• als ein piezoelektrisches Sensorelement;
• als ein katalytisches Sensorelement
• oder als ein piezoresistives Sensorelement
ausgebildet ist.

5. Messanordnung (10) nach einem der Ansprüche 2 bis 4, wobei die mindestens zwei Messmodule (51, 71, 91) nach Anspruch 1 oder Anspruch 2 und das weitere Sensorelement oder Messmodul (51, 71, 91) nach Anspruch 4 auf Oberflächen (13) eines gemeinsamen, planar ausgebildeten Trägerelementes (3) angeordnet sind.

6. Messanordnung (10) mit einer Sensoranordnung (1) nach einem der Ansprüche 2 bis 5, wobei der gemeinsame Gas- oder Strömungsraum (19) ein zu einer Strömungsführung eines Gasgemisches ausgebildetes Gehäuseelement oder eine Messküvette ausbildet.

7. Messanordnung (10) mit einer Sensoranordnung (1) nach einem der Ansprüche 2 bis 6, wobei die Messanordnung (10) eine Betriebselektronik (26, 27, 28, 29) aufweist, welche zu einer Inbetriebnahme, Justierung oder Kalibrierung der Messanordnung (10) und/oder einer Koordination eines Messbetriebes der Messanordnung (10), der Sensoranordnung (1) und/oder der Sensorelemente (5, 7, 9, 9') ausgebildet ist,
• wobei mindestens eines der Sensorelemente (5, 7, 9, 9') oder eines der Messmodule (51, 71, 91) in Zusammenwirkung mit der Betriebselektronik (26, 27, 28, 29) eine messtechnische Funktion eines Strömungs- oder Durchflussmengensensors ausbildet
• oder wobei mindestens eines der Sensorelemente (5, 7, 9, 9') oder eines der Messmodule (51, 71, 91) in Zusammenwirkung mit der Betriebselektronik (26, 27, 28, 29), den Elementen (11) zur Führung des Magnetfeldes und einer Spulenanordnung (33) eine messtechnische Funktion eines paramagnetischen Sauerstoffsensors ausbildet
• oder wobei mindestens eines der Sensorelemente (5, 7, 9, 9') oder eines der Messmodule (51, 71, 91) in Zusammenwirkung mit der Betriebselektronik (26, 27, 28, 29), Strahlungsquelle (15), einem optionalen Spiegelelement (17) und mindestens einem optischen Filterelement (16) eine messtechnische Funktion eines infrarot- optischen Gassensors ausbildet.

8. Messanordnung (10) nach Anspruch 7, wobei
das mindestens eine optische Filterelement (16)
• an dem mindestens einen planaren Trägerelement (3)
• oder an dem Gehäuseelement angeordnet ist
• oder als ein Teil des Gehäuseelementes ausgebildet ist,
und wobei die Strahlungsquelle (15) und/oder das optionale Spiegelelement (17)
• an dem mindestens einen planaren Trägerelement (3) angeordnet ist
• oder an dem Gehäuseelement angeordnet ist
• oder als ein Teil des Gehäuseelementes ausgebildet ist.

9. Messanordnung (10) nach Anspruch 8, wobei
die Spulenanordnung (33)
• als ein integrativer Teil des mindestens einen planaren Trägerelementes (3) ausgebildet ist
• oder an dem mindestens einen planaren Trägerelement (3) angeordnet ist
• oder an dem Gehäuseelement angeordnet ist
• oder als ein Teil des Gehäuseelementes ausgebildet ist.

10. Messanordnung (10) nach einem der Ansprüche 2 bis 7, wobei das Gehäuseelement mindestens einen Gaseinlass und mindestens einen Gasauslass und/oder Elemente zu einer Strömungsführung aufweist.

11. Sensoranordnung (1) nach Anspruch 1, sowie Messanordnung (10) nach einem der Ansprüche 2 bis 10, wobei
die Thermoelemente oder Thermosäulen der Sensorelemente (5, 7, 9, 9') als strukturierte Halbleiterelemente in Ausgestaltung von PN- dotierten Halbleiterelementen auf dem Halbleitersubstrat der Oberfläche (13) des mindestens einen planar ausgebildeten Trägerelementes (3) ausgebildet sind.

12. Messanordnung (10) nach einem der Ansprüche 2 bis 11, wobei die Messanordnung (10) eine Bestimmung von physikalischen oder chemischen Eigenschaften eines Gases oder Gasgemisches ermöglicht,
wobei mindestens eines der Sensorelemente (5, 7, 9, 9') und/oder ein weiteres Sensorelement
• zu einer Druckmessung;
• zu einer Dichtemessung;
• zu einer Viskositätsmessung;
• zu einer Konzentrationsmessung;
• zu einer Wärmeleitfähigkeitsmessung;
• zu einer Durchflussmengenmessung;
• zu einer Strömungsmessung;
• zu einer Strömungsgeschwindigkeitsmessung;
• zu einer Feuchtigkeitsmessung;
• zu einer Temperaturmessung
ausgebildet ist.

13. Messanordnung (10) nach einem der Ansprüche 7 bis 12, wobei die Betriebselektronik (26, 27, 28, 29) zumindest teilweise mit den Sensorelementen (5, 7, 9, 9') gemeinsam auf dem planar ausgebildeten, gemeinsamen Trägerelement (3) angeordnet ist, wobei das planar ausgebildete, gemeinsame Trägerelement (3) in einen gemeinsamen Gas- und Strömungsraum (19) integriert angeordnet ist.

14. Messanordnung (10) nach einem der Ansprüche 10 bis 13, wobei die Betriebselektronik (26, 27, 28, 29) und die Sensorelemente (5, 7, 9, 9') oder Messmodule (51, 71, 91) auf dem mindestens einen planaren Trägerelement (3) in dem gemeinsamen Gas- oder Strömungsraum (19) angeordnet sind, wobei eine der folgenden Anordnungen zur Bestimmung von physikalischen oder chemischen Eigenschaften eines Gases oder Gasgemisches auf dem mindestens einen planaren Trägerelement (3) ausgebildet wird:
• Anordnung zu Strömungs- oder Durchflussmengenmessung, Sauerstoffstoffkonzentrationsmessung und Gaskonzentrationsmessung für einen weiteren Gasbestandteil oder einen Feuchtigkeitsanteil im Gas oder Gasgemisch;
• Anordnung zu Strömungs- oder Durchflussmengenmessung und Sauerstoffstoffkonzentrationsmessung und Temperaturmessung;
• Anordnung zu Strömungs- oder Durchflussmengenmessung, Sauerstoffstoffkonzentrationsmessung und Druckmessung;
• Anordnung zu Strömungs- oder Durchflussmengenmessung, Sauerstoffstoffkonzentrationsmessung und Dichtemessung;
• Anordnung zu Sauerstoffstoffkonzentrationsmessung, Gaskonzentrationsmessung für einen weiteren Gasbestandteil oder einen Feuchtigkeitsanteil im Gas oder Gasgemisch und Temperaturmessung;
• Anordnung zu Sauerstoffstoffkonzentrationsmessung, Gaskonzentrationsmessung für einen weiteren Gasbestandteil oder einen Feuchtigkeitsanteil im Gas oder Gasgemisch und Druckmessung;
• Anordnung zu Sauerstoffstoffkonzentrationsmessung, Gaskonzentrationsmessung für einen weiteren Gasbestandteil oder einen Feuchtigkeitsanteil im Gas oder Gasgemisch und Dichtemessung;
• Anordnung zu Sauerstoffstoffkonzentrationsmessung, Druckmessung und Dichtemessung.
